# EUROPÄISCHE PATENTANMELDUNG

(11) **EP 2 264 493 A1**
(43) Veröffentlichungstag der Anmeldung: **22.12.2010**
(21) Anmeldenummer: 10006207.4
(22) Anmeldetag: 15.06.2010
(51) Int. Cl.: G02B 6/00, B60Q 3/04, F21V 7/00, F21V 13/04

(54) **Lightleiter mit Reflektoren zur gleichmäßigen Flächenausleuchtung**

(30) Priorität: 16.06.2009 DE 102009025399
(71) Anmelder: Karl, Gerhard, Dipl.-Phys., 97267 Himmelstadt (DE)
(72) Erfinder: Karl, Gerhard, Dipl.-Phys., 97267 Himmelstadt (DE)
(74) Vertreter: Pöhner, Wilfried Anton, Dr.

(57) **Zusammenfassung**

Leuchtkörper zur gleichmäßigen Ausleuchtung einer Lichtaustrittsfläche, bestehend aus einer länglichen Lichtleiste aus transluzentem Material mit einer in Längsrichtung verlaufenden Lichtaustrittsfläche und mit wenigstens einer an der gegenüberliegenden Seite angeordneten Lichteintrittsfläche, deren gesamte Fläche kleiner als die Lichtaustrittsfläche ist und wenigstens einer Lichtquelle, deren Lichtfläche etwa einer Lichteintrittsfläche entspricht und die einen Lichtkegel in die Lichteintrittsfläche wirft und die von der nächsten Lichtquelle beabstandet ist, wobei im Lichtkegel wenigstens ein Erstreflektor angeordnet ist, der einen Teil der Lichtstrahlen der Lichtquelle reflektiert und auf wenigstens einen Zweitreflektor wirft, der außerhalb des Lichtkegels angeordnet ist und der die Lichtstrahlen in Richtung der Lichtaustrittsfläche wieder abstrahlt.

## Beschreibung

Die Erfindung bezieht sich auf einen Leuchtkörper zur gleichmäßigen Ausleuchtung einer Lichtaustrittsfläche, bestehend aus einer länglichen Lichtleiste aus transluzentem Material mit einer in Längsrichtung verlaufenden Lichtaustrittsfläche und mit wenigstens einer an der gegenüberliegenden Seite angeordneten Lichteintrittsfläche, deren gesamte Fläche kleiner als die Lichtaustrittsfläche ist und wenigstens einer Lichtquelle, deren Lichtfläche einer Lichteintrittsfläche zugeordnet ist und die einen Lichtkegel in die Lichteintrittsfläche wirft und die von der benachbarten Lichtquelle beabstandet ist.

Die gleichmäßige Ausleuchtung einer Fläche mit nur möglichst wenigen Lichtquellen ist eine auf aktuellem Stand der Technik oft gestellte Aufgabe, für die zahlreiche Lösungsvorschläge existieren.

Es ist ohne weiteres nachvollziehbar, dass durch das ganz dichte Aneinanderreihen von sehr zahlreichen, relativ kleinen Lichtquellen eine Fläche gleichmäßig ausgeleuchtet wird. Durch die sehr hohe Anzahl der dafür benötigten Lichtquellen sind aber auch die Kosten für die Lichtquellen selbst und für deren Ansteuerung sehr hoch.

Auf aktuellem Stand der Technik ist es deshalb bekannt, einen flächigen Lichtleiter aus transluzentem Kunststoff einzusetzen, wie z. B. PMMA (Polymethylmetacrylat), der das Licht praktisch vollständig hindurch lässt.

Es ist bekannt, in eine Platte aus PMMA an einer Stirnkante durch zahlreiche Lichtquellen Licht einzukoppeln, das durch reflektierende Elemente auf einer großen Fläche der Platte zur gegenüberliegenden, großen Fläche reflektiert wird und dort austritt.

Zum Beispiel beschreibt die DE 10 2008 049 256 einen Lichtleiter, der zur gleichmäßigen Ausleuchtung eines Schildes dient. Dazu werden an der Längskante einer Platte aus PMMA zahlreiche Lichtquellen angeordnet. In eine der beiden großen Flächen dieser Platte sind zahlreiche, sehr kleine Sacklöcher - also Bohrungen mit begrenzter Tiefe - mit einem Durchmesser von rund 100 µm und einer Tiefe von etwa 10 µm eingebracht.

Diese winzigen Bohrungen sind so klein, dass sie nicht sofort als solche wahrnehmbar sind. Dennoch sorgen sie dafür, dass ein bestimmter Anteil der Lichtstrahlen reflektiert wird und auf das hinter der PMMA-Platte angeordnete Schriftfeld leuchtet. Die Reflektion ist jedoch nicht total, sodass Lichtstrahlen auch durch die Sacklöcher hindurch weiter bis zum nächsten kleinen Sackloch gelangen können. Ein Vorzug dieses Lichtleiters ist, dass eine dahinter angeordnete Schrifttafel durch ihn hindurch noch erkennbar ist.

Ein Nachteil dieser Anordnung ist, dass die zahlreichen kleinen Lichtstreuelemente insgesamt doch als ein "Grauschleier" wahrnehmbar sind. Ferner ist der Anteil des nach außen hin reflektierten Lichtes vergleichsweise klein. Diese Anordnung ist deshalb für die möglichst gleichmäßige und effiziente Verteilung von Lichtstrahlen auf einer Fläche, die nicht durchsichtig sein soll, weniger geeignet.

Auf diesem Hintergrund hat sich die Erfindung die Aufgabe gestellt, einen Leuchtkörper zu schaffen, der aus einer Lichtleiste besteht, an deren einer Kante eine geringe Anzahl von Lichtquellen angeordnet ist, deren Lichtstrahlen innerhalb der Lichtleiste möglichst gleichmäßig auf eine gegenüberliegende Lichtaustrittsfläche verteilt werden.

Als Lösung lehrt die Erfindung, dass im Lichtkegel wenigstens ein Erstreflektor angeordnet ist, der einen Teil der Lichtstrahlen der Lichtquelle reflektiert und auf wenigstens einen Zweitreflektor wirft, der außerhalb des Lichtkegels angeordnet ist und der die Lichtstrahlen in Richtung der Lichtaustrittsfläche wieder abstrahlt.

Das entscheidende Merkmal der Erfindung sind also wenigstens zwei Reflektoren in der Nähe einer jeden Lichtquelle. Durch den Erstreflektor wird aus dem Lichtkegel ein Teil der Lichtstrahlen abgezweigt und auf den Zweitreflektor geworfen. Dadurch, dass der Zweitreflektor außerhalb des Lichtkegels angeordnet ist und den empfangenen Lichtstrahl wieder in Richtung der Lichtaustrittsquelle abstrahlt, wird mit dieser Anordnung der Lichtkegel der Lichtquelle optisch verbreitert. Nur ein geringer Teil der Lichtstrahlen der Lichtquelle verläuft direkt zur Lichtaustrittsfläche der Lichtleiste. Die übrigen Lichtstrahlen verlaufen Z-förmig: Vom Erstreflektor werden sie "zur Seite hin" geworfen und treffen neben dem Lichtkegel auf einen weiteren Reflektor, den Zweitreflektor, der sie "wieder nach vorne" in Richtung der Lichtaustrittsfläche wirft.

Nur der mittlere Teil des Lichtkegels durchläuft das Material des Lichtleiters. Die äußeren Teile des Lichtkegels der Lichtquelle werden vom Erstreflektor nach außen geworfen und gelangen über die Zweitreflektoren auf die Lichtaustrittsfläche, sie werden also auf der Lichtaustrittsfläche "auseinander gezogen".

Der erfindungsgemäße Lichtleiter ist damit für verschiedene Anwendungen geeignet, z.B. auch für die so genannte "Kantenbeleuchtung", womit die Ausleuchtung einer Schnittkante einer das Licht leitenden Platte gemeint ist.

Für eine möglichst kompakte Form des Lichtleiters ist es sinnvoll, dass die Zweitreflektoren in der Nähe der der Lichtaustrittsfläche gegenüberliegenden Seite des Lichtleiters und außerhalb der Lichteintrittsflächen angeordnet sind. Je nach Anwendung können die Zweitreflektoren jedoch auch anderswo angeordnet werden.

Die erfindungsgemäße Anordnung der Reflektoren in der Lichtleiste ist für alle Arten von Lichtquellen geeignet. Auf aktuellem Stand der Technik werden vorrangig Leuchtdioden verwendet, auch Light Emitting Diodes (LED)genannt. Diese LED's sind sowohl als flächige Bauelemente wie auch als Lichtquellen mit einem ziemlich schmalen Lichtkegel bekannt. Verwendbar sind auch Mehrfach-LED's, die in einem gemeinsamen Gehäuse angeordnet sind, und dadurch eine längliche Lichtfläche aufweisen. In Abhängigkeit davon kann der Lichtkegel der Mehrfach-LED ein gleichmäßiger Kegel mit einem runden Querschnitt oder auch mit einem elliptischen oder ovalen Querschnitt sein.

Wenn der Lichtkegel einer Mehrfach-LED in mehrere Bereiche mit unterschiedlicher Lichtstärke aufgeteilt ist, dann sollte der Abstand zwischen den Erstreflektoren mit zunehmender lokaler Lichtstärke der Bereiche kleiner gewählt werden.

In zahlreichen Fällen - wie z.B. bei Verwendung jeweils einer einzigen LED als Lichtquelle - ist die Lichtstärke in der Nähe der Längsachse des Lichtkegels am größten und reduziert sich zu beiden Seiten der Längsachse hin bis auf Null. Oft verläuft die Lichtstärke senkrecht zur Längsachse einer LED als Cosinus. Wenn in einen solchen Lichtkegel eine Schnittfläche hineingelegt wird und auf dieser Schnittfläche alle Lichtpunkte mit gleicher Lichtstärke miteinander verbunden werden, so verlaufen diese Linien jeweils in Form einer Keule. Die Lichtpunkte in der Mitte mit der größten Helligkeit bilden die Form einer kleinen Keule, die von immer größeren Keulen umrahmt werden, welche die Lichtpunkte mit der jeweils nächst niedrigen Lichtstärke miteinander verbinden. Da diese Lichtkegel i.d.R. zu beiden Seiten ihrer Längsachse etwa symmetrisch verlaufen, ist es sinnvoll, dass als eine Ausführungsvariante die Längsachse des Lichtkegels senkrecht zur Lichteintrittsfläche verläuft und deshalb auch die Erstreflektoren ebenso wie die Zweitreflektoren symmetrisch zur Längsachse der Lichtquelle angeordnet sind.

Dabei ist die Anzahl der Erstreflektoren und der Zweitreflektoren variabel. In der einfachsten Variante teilen die Erstreflektoren den Lichtkegel in drei Sektoren auf. Der mittlere Sektor ist i.d.R. etwas schmäler als die beiden äußeren Sektoren, sodass in allen drei Sektoren eine etwa gleiche Lichtmenge abgegeben wird. Die Lichtmenge des mittleren Sektors strahlt direkt zur Lichtaustrittsfläche und leuchtet dort einen Anteil der Lichtaustrittsfläche aus, der größer ist als ihr Anteil an der Lichteintrittsfläche.

Die Lichtmengen der beiden anderen Sektoren werden jeweils zur linken und zur rechten Seite durch je einen Erstreflektor aus dem Lichtkegel ausgekoppelt. Von dort werden sie auf den Zweitreflektor geworfen, der sie auf die Lichtaustrittsfläche abstrahlt.

Der Erstreflektor und der Zweitreflektor sind dabei in ihren Winkeln zur Längsachse der Lichtquelle und in ihrem Winkel zueinander so ausgerichtet, dass sich ihr Anteil an der Lichtmenge auf der Lichtaustrittsfläche jeweils anschließend an den "mittleren Anteil" verteilt. Für eine noch großflächigere Verteilung der Lichtmenge auf der Lichtaustrittsfläche kann der Anteil des direkt durchgelassenen Lichtes weiter reduziert werden und ein größerer Anteil des Lichtkegels in den Außenbereich durch größere Erstreflektoren oder durch eine größere Anzahl von Erstreflektoren weiter verteilt werden.

Sinnvoll ist es z. B., an den mittleren, unreflektierten Bereich des Lichtkegels auf beiden Seiten je zwei Erstreflektoren anzugliedern, die dann auf jeweils zwei oder mehr Zweitreflektoren ihren Anteil an der Lichtmenge werfen.

Dabei können - je nach Anwendung die Winkel zwischen der Längsachse und den Erstreflektoren und/oder den Zweitreflektoren jeweils ähnlich sein oder auch deutlich voneinander abweichen.

Im einfachsten Fall bestehen die Erstreflektoren und/oder die Zweitreflektoren aus einer Ebene.

Wenn eine größere Anzahl von Erstreflektoren und/oder von Zweitreflektoren eingesetzt wird, könne sie zueinander beabstandet sein, sodass durch die Zwischenräume zwischen den Reflektoren Lichtstrahlen von der Lichtquelle direkt zur Lichtaustrittsfläche gelangen können.

Je nach Auftreffen zur optischen Achse der Reflektoren werden die Lichtstrahlen in Folge der Totalreflektion durchgelassen oder total reflektiert. Somit ergibt sich eine Aufspaltung der Lichtstrahlen der Lichtquelle.

An Stelle einer großen Anzahl von Zweitreflektoren ist es auch sinnvoll, dass wenigstens ein Zweitreflektor aus einer eindimensional gekrümmten Fläche besteht, die z.B. wie eine Parabel oder wie eine andere fokussierenden Kurve verläuft.

In einer sehr einfache und ebenso kostengünstige wie zeitsparende Form der Herstellung können die Erstreflektoren und/oder die Zweitreflektoren durch die beiden Wandungen eines Schlitzes in einer Platte aus Acryl oder aus einem anderen transluzenten Kunststoff gebildet werden.

Die Schnittflächen dieses Schlitzes können z.B. hoch glänzend ausgeführt werden, wozu die Vorschubgeschwindigkeit des Schnittwerkzeuges darauf abgestimmt ist, dass die Oberfläche des Kunststoffes kurzzeitig verflüssigt wird und dadurch ineinander verläuft. In anderen Anwendungen sind auch mattierte Oberflächen der Schnittflächen des Schlitzes sinnvoll.

Es ist ein ganz wesentliches Merkmal der Erfindung, dass die Lichtquellen mit ihren Lichteintrittsflächen in einem relativ großen Abstand zueinander angeordnet sind. Deshalb ist die Summe aller Lichteintrittsflächen stets kleiner als die eine Lichtaustrittsfläche an der gegenüberliegenden Seite des Lichtleiters. Der Lichtaustrittsfläche liegen also Lichteintrittsflächen und dazwischen jeweils kein Licht übertragende Flächen gegenüber. Die Flächen zwischen den Lichtleitflächen können mit reflektierendem Material, wie z. B. Aluminiumfolien, beschichtet werden und dadurch als Zweitreflektoren genutzt werden. Diese Variante ist z.B. dann sehr interessant, wenn ein einziger Zweitreflektor durchgehend und gekrümmt verläuft.

Die Lichtquellen sollten idealer Weise so beschaffen und so ausgerichtet sein, dass möglichst die gesamte, von ihnen abgestrahlte Lichtmenge auch in den Lichtleiter eingekoppelt wird. Dazu ist es natürlich die einfachste Maßnahme, den Winkel des Lichtkegels recht klein zu wählen.

Falls dieser Winkel jedoch so groß ist, dass das nicht vollständig möglich ist, schlägt die Erfindung vor, dass in die Lichtleitzonen der Lichteintrittsfläche Lichtzerstreuer eingeformt sind. Sie bestehen z.B. aus mehreren, aneinander gereihten, rinnenartigen Vertiefungen jeweils in Form eines Hohlzylindersegmentes, deren Längsachse senkrecht zur Lichteintrittsfläche und senkrecht zur Längsachse der Lichtleiste angeordnet ist.

Ein solcher Lichtzerstreuer kann auch ein von der Lichtleiste getrenntes Bauteil sein. Dann ist es möglich, für eine Lichtleiste verschiedene Lichtzerstreuer zu verwenden, die in verschiedenen Varianten auf verschiedene Helligkeiten der Lichtquelle und/oder verschiedene Winkel des Lichtkegels und/oder auf eine aus mehreren, ohne Abstand zueinander zusammengesetzten Einzellichtquellen bestehende Lichtquelle abgestimmt ist. Auf diese Weise kann ein Baukasten entstehen, mit dem eine Lichtleiste an verschiedene Arten der Lichtquelle angepasst werden kann.

Als eine weitere Ausführungsvariante können in den Lichtleiter in der Nähe der Lichtaustrittsfläche das Licht aufstreuende Aufstreuelemente, wie z.B. Bohrungen und/oder Linsen und/oder gekrümmte Linien eingebracht werden. Dadurch wird die Lichtverteilung weiter homogenisiert.

Die Aufgabe der Erfindung besteht darin, dass die Lichtmenge aus mehreren, zueinander beabstandeten Lichtquellen auf eine Fläche gleichmäßig verteilt wird. Bis zu dieser Stelle dieses Textes ist beschrieben, wie eine Lichtleiste - auch "Kantenbeleuchtung" genannt - durch Einbringen von Reflektoren die Lichtmenge zueinander beabstandeter Lichtquellen auf eine streifenförmige Lichtaustrittsfläche verteilt, die der Lichteintrittsfläche gegenüber liegt.

Für Anwendungsfälle, bei denen eine streifenförmige Lichtaustrittsfläche zu klein oder nicht geeignet ist, kann sie durch das Ansetzen oder Anformen eines das Licht leitenden Elementes mit aufstreuenden Strukturen an die Lichtaustrittsfläche vergrößert oder anderweitig verändert werden. Dadurch können beliebig geformte Flächen ausgeleuchtet werden.

Das Licht leitende Element kann z.B. aus einer Platte bestehen, an deren einer Längskante die Lichtleiste angesetzt wird. Dann werden die aus der Lichtaustrittsfläche der Lichtleiste austretenden, gleichmäßig verteilten Lichtstrahlen in den plattenförmigen Lichtleiter eintreten. Dort werden sie durch das Licht aufstreuende Elemente in wenigstens eine Richtung der beiden großen Flächen der Platte aufgestreut.

Eine interessante Ausführungsform dafür sind rasterförmig angeordnete Punkte aus reflektierendem Material. Sinnvollerweise ist der Durchmesser dieser Punkte in der Nähe der Lichtleiste relativ klein und wird mit zunehmendem Abstand immer größer. Dadurch wird erreicht, dass die gesamte Fläche des plattenförmigen Lichtleiters durch die angesetzte Lichtleiste gleichmäßig ausgeleuchtet wird.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: schematischer Strahlengang in einer Lichtleiste mit mehreren Zweitreflektoren
- Figur 2: Strahlengang in einer Lichtleiste mit einem ge- krümmten Zweitreflektor

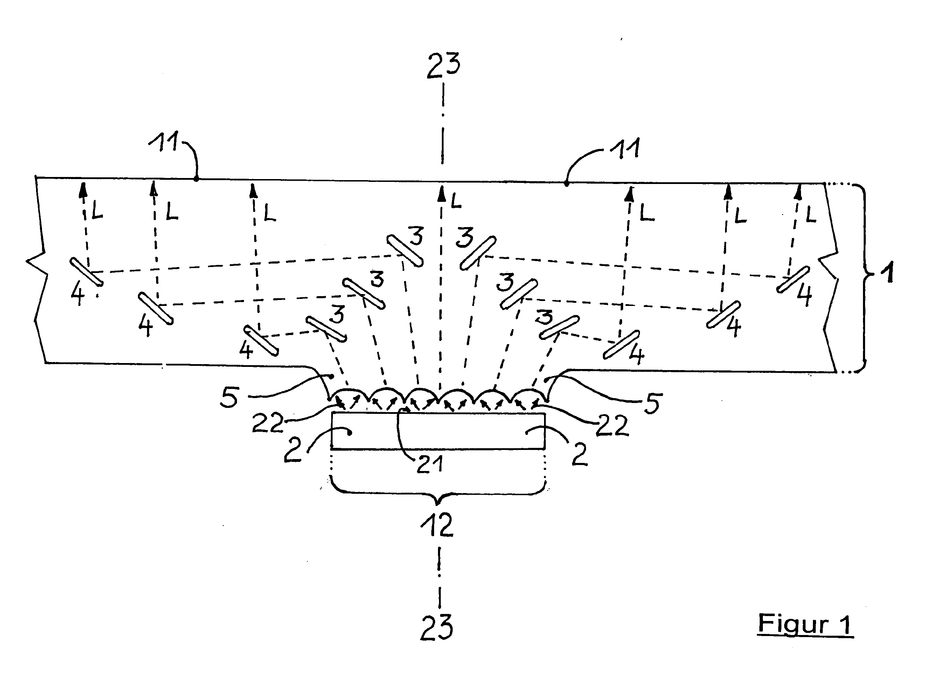

In **Figur 1** ist die Aufsicht auf einen Teil einer erfindungsgemäßen Lichtleiste gezeigt, und zwar auf einen Ausschnitt um eine Lichtquelle 2 herum, der den Verlauf ihrer Lichtstrahlen L vollständig zeigt. Die längliche Lichtleiste 1 hat in diesem Ausführungsbeispiel einen rechteckigen Querschnitt. Von diesem Querschnitt ist die nach oben weisende, senkrecht zum Betrachter der Figur 1 verlaufende Fläche die Lichtaustrittsfläche 11, aus der die Lichtstrahlen L gleichmäßig verteilt austreten. Dazu gegenüber und etwa parallel verläuft die Lichteintrittsfläche 12 an der unteren Kante der Lichtleiste 1.

Sehr gut nachvollziehbar ist in Figur 1, dass die Lichteintrittsfläche 12 viel kleiner ist als die Lichtaustrittsfläche 11, weshalb es zwischen den Lichteintrittsflächen 12 weitere, der Lichtaustrittsfläche gegenüber liegende Flächen gibt, in die kein Licht eintritt.

Im hier gezeichneten Ausführungsbeispiel ist der gesamte Lichtkegel 22 der aus mehreren Einzellichtquellen zusammengesetzten Lichtquelle 2 symmetrisch aufgebaut. Deshalb ist die Längsachse 23 des Lichtkegels 22 senkrecht zu der Lichteintrittsfläche 12a angeordnet. Zusätzlich ist bei der dargestellten Ausführungsvariante in die Lichteintrittsfläche 12 ein Lichtzerstreuer 5 eingesetzt, da der Winkel des Lichtkegels 22 der Lichtquelle 2 relativ groß ist. Der Lichtzerstreuer 5 sorgt durch seine zahlreichen, zylindersegmentförmigen Kerben, die senkrecht zum Betrachter verlaufen, dafür, dass auch relativ weit nach außen abgestrahlte Lichtstrahlen L noch in die Lichtleiste L eintreten.

Das Ausführungsbeispiel der Figur 1 weist insgesamt sechs Stück Erstreflektoren 3 auf, jeweils drei Stück zu beiden Seiten der Längsachse 23 des Lichtkegels 22. Alle Erstreflektoren 3 sind so angeordnet, dass sie die empfangenen Lichtstrahlen L auf je einen Zweitreflektor 4 werfen, der sie wiederum in die Richtung der Lichtaustrittsfläche 11 abstrahlt.

Dabei ist es keinesfalls erforderlich, dass die Richtung der von den Zweitreflektoren 4 abgestrahlten Lichtstrahlen L genau parallel zu den direkt aus der Lichtquelle 2 austretenden, unreflektierten Lichtstrahlen L verläuft. Vielmehr ist im Ausführungsbeispiel der Figur 1 gezeigt, dass die Richtung der von den äußersten Zweitreflektoren 4 abgestrahlten Lichtstrahlen L etwas "aufgefächert" gegenüber dem mittleren, direkt verlaufenden Lichtstrahl L ausgerichtet ist.

Im Ausführungsbeispiel der Figur 1 ist nur etwa 1/7 der gesamten von der Lichtquelle 2 abgestrahlten Lichtmenge direkt zur Lichtaustrittsfläche 11 gerichtet. Diese Lichtstrahlen L verlaufen in der Mitte der Längsachse 23 sowie zwischen den Erstreflektoren 3 hindurch. Die übrigen Lichtstrahlen L, die auf die Erstreflektoren 3 treffen, werden - abhängig vom Reflexionsgrad der Erstreflektoren 3 - auf Zweitreflektoren 4 geworfen, um von dort zur Lichtaustrittsfläche 11 zu gelangen.

Bei der in Figur 1 gezeichneten Variante entspricht die Anzahl der Erstreflektoren 3 der Anzahl der Zweitreflektoren 4. Es sind jedoch auch andere Kombinationen von verschiedenen Anzahlen der Erstreflektoren und der Zweitreflektoren möglich.

In Figur 1 ist als Ausführungsform für die Erstreflektoren 3 und die Zweitreflektoren 4 eingezeichnet, dass sie ein kleiner Schlitz sind, der in die plattenförmige Lichtleiste 1 eingebracht ist und von oben her als ein Oval erkennbar ist.

In Figur 1 ist sehr gut nachzuvollziehen, dass die Lichtfläche 21 der Lichtquelle 2 durch die Lichtleiste 1 fast auf das vierfache ausgedehnt wird. Dadurch wird das kostenträchtige Einbauen sehr zahlreicher Lichtquellen 2 vermieden. Stattdessen können - wie in diesem Ausführungsbeispiel - mehrere, bereits bei der Herstellung zu einem Block verbaute LED's mit deutlich niedrigeren Gestehungskosten und deutlich niedrigem Aufwand für Einbau und Verdrahtung verwendet werden.

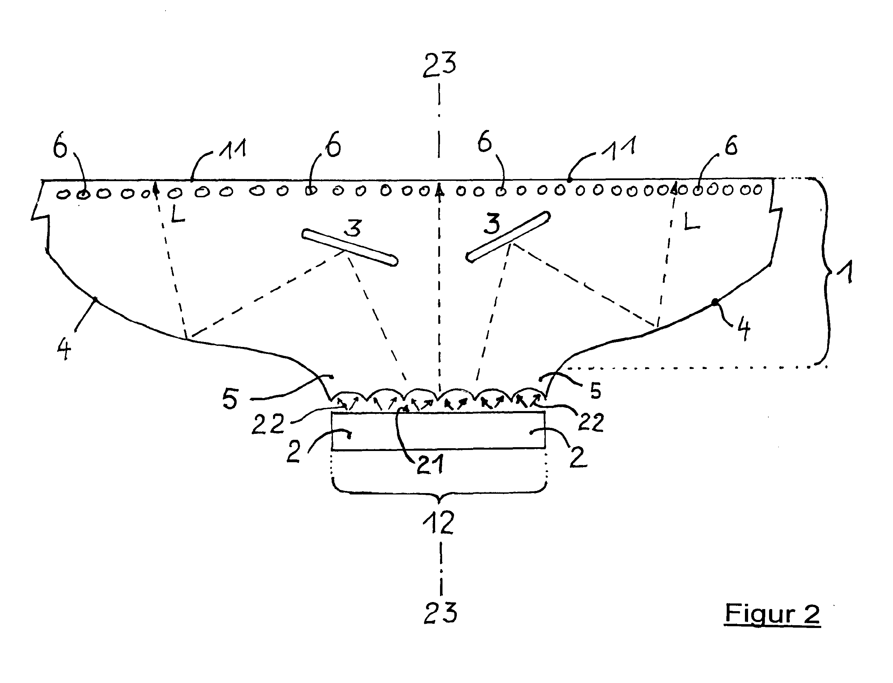

In **Figur 2** ist der Strahlengang in einer Lichtleiste mit einem gekrümmten Zweitreflektor 4 dargestellt, der eine fokussierende Wirkung hat. Besonders interessant ist, dass bei dieser Ausführungsform die der Lichtaustrittsfläche 11 gegenüberliegende Kante außerhalb der Lichteintrittsfläche 12 als Zweitreflektor 4 genutzt wird. Da sie von außen her zugänglich ist, ist die Herstellung vergleichsweise einfach. Außerdem kann mit geringem Aufwand ein Reflektionsmaterial aufgebracht werden, so dass die Lichtstrahlen L nahezu vollständig reflektiert werden.

In Figur 2 sind als eine weitere Ausführungsvariante die zusätzlichen Aufstreuelemente 6 zum Aufstreuen der Lichtstrahlen L eingezeichnet. Sie sind in diesem Beispiel in der Nähe der Lichtaustrittsfläche 11 angeordnet.

### Bezugszeichenliste

- L: Lichtstrahl aus der Lichtquelle 2
- 1: Lichtleiste
- 11: Lichtaustrittsfläche, in Längsrichtung der Lichtleiste
- 12: Lichteintrittsfläche, an der zur Lichtaustrittsfläche 11 gegenüberliegenden Seite der Lichtleiste 1
- 2: Lichtquelle 2
- 21: Lichtfläche der Lichtquelle 2
- 22: Lichtkegel der Lichtquelle 2
- 23: Längsachse des Lichtkegels 22
- 3: Erstreflektor, innerhalb des Lichtkegels 22
- 4: Zweitreflektor, außerhalb des Lichtkegels 22
- 5: Lichtzerstreuer, angrenzend an die Lichteintrittsfläche 12
- 6: Aufstreuelemente zum Aufstreuen von Lichtstrahlen L

## Patentansprüche

1. Leuchtkörper zur gleichmäßigen Ausleuchtung einer Lichtaustrittsfläche 11, bestehend aus
- einer länglichen Lichtleiste 1 aus transluzentem Material
- mit einer in Längsrichtung verlaufenden Lichtaustrittsfläche 11 und
- mit wenigstens einer an der gegenüberliegenden Seite angeordneten Lichteintrittsfläche 12, deren gesamte Fläche kleiner als die Lichtaustrittsfläche 11 ist und
- wenigstens einer Lichtquelle 2,
- deren Lichtfläche 21 einer Lichteintrittsfläche 12 zugeordnet ist und
- die einen Lichtkegel 22 in die Lichteintrittsfläche 12 wirft und
- die von der benachbarten Lichtquelle 2 beabstandet ist,
**dadurch gekennzeichnet, dass**
- im Lichtkegel 22 wenigstens ein Erstreflektor 3 angeordnet ist,
- der einen Teil der Lichtstrahlen L der Lichtquelle 2 reflektiert und
- auf wenigstens einen Zweitreflektor 4 wirft,
- der außerhalb des Lichtkegels 22 angeordnet ist und
- der die Lichtstrahlen L in Richtung der Lichtaustrittsfläche 11 wieder abstrahlt.

2. Leuchtkörper nach Anspruch 1, **dadurch gekennzeichnet, dass** wenigstens ein Zweitreflektor 4 in der Nähe der der Lichtaustrittsfläche 11 gegenüberliegenden Seite des Lichtleiters 1 und außerhalb der Lichteintrittsflächen 12 angeordnet ist.

3. Leuchtkörper nach Anspruch 1, **dadurch gekennzeichnet, dass**
- die Lichtstärke der Lichtquelle 2 in der Nähe der Längsachse 23 des Lichtkegels 22 am größten ist und
- sich zu beiden Seiten hin bis zum Rande des Lichtkegels 22 auf Null reduziert.

4. Leuchtkörper nach einem der vorhergehenden Ansprüche, **dadurch gekennzeichnet, dass**
- die Längsachse 23 des Lichtkegels 22 senkrecht zur Lichteintrittsfläche 12 ausgerichtet ist und
- die Lichtstärke symmetrisch zur Längsachse 23 verläuft und
- die Erstreflektoren 3 und die Zweitreflektoren 4 symmetrisch zur Längsachse 23 angeordnet sind.

5. Leuchtkörper nach einem der vorhergehenden Ansprüche, **dadurch gekennzeichnet, dass** der Lichtkegel 22 in mehrere Bereiche aufgeteilt ist, und der Abstand zwischen den Erstreflektoren 3 mit zunehmender lokaler Lichtstärke der Bereiche kleiner gewählt wird.

6. Leuchtkörper nach einem der vorhergehenden Ansprüche, **dadurch gekennzeichnet, dass** die Winkel zwischen der Längsachse 23 und den Erstreflektoren 3 und/oder den Zweitreflektoren 4 jeweils voneinander abweichen.

7. Leuchtkörper nach einem der vorhergehenden Ansprüche, **dadurch gekennzeichnet, dass** die Erstreflektoren 3 und/oder die Zweitreflektoren 4 aus einer Ebene bestehen.

8. Leuchtkörper nach Anspruch 7, **dadurch gekennzeichnet, dass** die Erstreflektoren 3 und/oder die Zweitreflektoren 4 zueinander beabstandet sind und durch die Zwischenräume Lichtstrahlen L von der Lichtquelle 2 direkt zur Lichtaustrittsfläche 11 strahlen.

9. Leuchtkörper nach einem der vorhergehenden Ansprüche, **dadurch gekennzeichnet, dass** wenigstens ein Zweitreflektor 4 als eindimensional gekrümmte Fläche geformt ist.

10. Leuchtkörper nach einem der vorhergehenden Ansprüche, **dadurch gekennzeichnet, dass** die Erstreflektoren 3 und/oder die Zweitreflektoren 4 durch die beiden Wandungen eines Schlitzes in der Lichtleiste 1 gebildet werden.

11. Leuchtkörper nach Anspruch 10, **dadurch gekennzeichnet, dass** in wenigstens eine Lichteintrittsfläche 12 ein Lichtzerstreuer 5 eingeformt ist, der z.B. aus mehreren, aneinander gereihten Vertiefungen in Form eines Zylindersegmentes besteht.

12. Leuchtkörper nach Anspruch 11, **dadurch gekennzeichnet, dass** der Lichtzerstreuer 5 ein von der Lichtleiste 1 getrenntes Bauteil ist, das in verschiedenen Varianten
- auf eine verschiedene Helligkeit der Lichtquelle 2 und/oder
- auf einen verschiedenen Winkel des Lichtkegels 22 und/oder
- auf eine aus mehreren, ohne Abstand zueinander zusammengesetzten Einzellichtquellen bestehende Lichtquelle 2 abgestimmt ist.

13. Leuchtkörper nach einem der vorhergehenden Ansprüche, **dadurch gekennzeichnet, dass** in den Lichtleiter 1 in der Nähe der Lichtaustrittsfläche 11 das Licht aufstreuende Aufstreuelemente 6, wie z.B.
- Bohrungen und/oder
- Linsen und/oder
- gekrümmte Linien
eingebracht sind.

14. Leuchtkörper nach einem der vorhergehenden Ansprüche, **dadurch gekennzeichnet, dass** auf die Lichtaustrittsfläche 11 ein das Licht leitende Element mit aufstreuenden Strukturen aufgesetzt oder angeformt ist.

15. Leuchtkörper nach einem der vorhergehenden Ansprüche, **dadurch gekennzeichnet, dass** auf die Lichtaustrittsfläche 11
- ein etwa plattenförmiges, das Licht leitende Element aufgesetzt oder angeformt ist,
das mit Licht aufstreuenden Elementen versehen ist.

16. Leuchtkörper nach Anspruch 15, **dadurch gekennzeichnet, dass** die Reflektoren auf der großen Fläche des Licht leitenden Elementes rasterförmig angeordnete und zueinander beabstandete Punkten sind, deren Durchmesser mit zunehmendem Abstand von der Lichtaustrittsfläche 11 immer größer werden.

17. Verfahren zur Herstellung eines Erstreflektors 3 und/oder eines Zweitreflektors 4, **dadurch gekennzeichnet, dass** in eine Platte aus Acryl (Polymethylmetacrylat) oder einem anderen transluzenten Kunststoff
- durch Spritzguss oder
- mit einem Laserstrahl oder
- mit einem Wasserstrahl oder
- mit einem anderen Werkzeug
schmale Schlitze eingebracht werden.
